# EUROPÄISCHE PATENTANMELDUNG

(11) **EP 1 936 214 A2**
(43) Veröffentlichungstag der Anmeldung: **25.06.2008**
(21) Anmeldenummer: 07023095.8
(22) Anmeldetag: 29.11.2007
(51) Int. Cl.: F16C 13/00

(54) **Walze mit Schwingungsdämpfer sowie Verfahren zur Dämpfung von Schwingungen einer Walze**

(30) Priorität: 22.12.2006 DE 102006062284
(71) Anmelder: Andritz Küsters GmbH, 47805 Krefeld (DE)
(72) Erfinder: Hader, Peter, Dr., 47906 Kempen (DE)
(74) Vertreter: Kluin, Jörg-Eden

(57) **Zusammenfassung**

Eine Walze (100) und ein Verfahren zur Dämpfung von Schwingungen der Walze, mit einem den Arbeitsumfang der Walze (100) bildenden und einen Raum (R) umschließenden Walzenmantel (1) mit einem einen Ringraum zum Walzenmantel belassenden, den Walzenmantel (1) in Längsrichtung durchsetzenden Träger (2), und mit einer Einrichtung zur Schwingungsdämpfung (8), bei welchen die Einrichtung zur Schwingungsdämpfung (8) innerhalb des Raumes (R) angeordnet und ausschließlich an den Träger (2) angekoppelt ist.

## Beschreibung

Die Erfindung betrifft eine Walze mit einem den Arbeitsumfang der Walze bildenden Walzenmantel mit einem einen Ringraum zum Walzenmantel belassenden, den Walzenmantel in Längsrichtung durchsetzenden Träger und mit einer Einrichtung zur Schwingungsdämpfung, sowie ein Verfahren zur Dämpfung von Schwingungen einer derartigen Walze.

Eine solche Walze ist aus der DE 295 09 545 U1 bekannt. Bei dieser Walze sind in dem Ringraum zwischen dem Walzenmantel und dem Träger in einer sich in Längsrichtung der Walze erstreckenden Reihe angeordnete, hydraulische Stützelemente vorgesehen, mittels welchen der Walzenmantel mit unterschiedlichen Kräften beaufschlagt werden kann. Hierdurch ist es möglich, den Walzenmantel gezielt durchzubiegen, so dass man in diesem Falle von einer durchbiegesteuerbaren Walze spricht.

Zur Dämpfung von Schwingungen dieser Walze, die zu einer Verlagerung der beweglichen Teile der hydraulischen Stützelemente führt, sind in den Zuleitungen für das hydraulische Medium zum Betrieb der Stützelemente Drosseln vorgesehen, so dass die Bewegung der hydraulischen Stützelemente gedämpft wird und diese somit der Schwingung entgegenwirkende Kräfte auf den Walzenmantel ausüben.

Nachteilig ist bei dieser Walze, dass sie aufwändig in ihrer Herstellung ist.

Aus der DE 102 48 519 B4 ist eine Hohlwalze bekannt, bei welcher innerhalb des Walzenmantels eine Mehrzahl von innen an dem Walzenmantel anliegende Tilgeranordnungen vorgesehen sind, die jeweils einen passiven, eine bewegliche Masse und ein Dämpfungselement aufweisenden Schwingungstilger beinhalten.

Nachteilig ist bei dieser Walze, dass sie aufgrund des Fehlens des Trägers nicht als durchbiegesteuerbare Walze ausgebildet werden kann. Darüber hinaus ist es in der Praxis sehr schwierig die Tilgeranordnungen dauerhaft in einem Maße zu zentrieren, dass die Walze den zu einem störungsfreien Betrieb benötigten Rundlauf aufweist.

Der Erfindung liegt die Aufgabe zugrunde, eine gattungsgemäße Walze derart weiterzubilden, dass auf konstruktiv einfache Weise eine wirksame Bedämpfung von Schwingungen der Walze erfolgt.

Diese Aufgabe wird durch die in Anspruch wiedergegebene Walze und durch das Verfahren gemäß Anspruch 14 gelöst.

Erfindungsgemäß ist die Einrichtung zur Schwingungsdämpfung ausschließlich an den Träger angekoppelt.

Der Erfindung liegt die überraschende Erkenntnis zugrunde, dass die Dämpfung des Trägers in dem vom Walzenmantel umschlossenen Raum allein ausreicht, um eine Schwingung der gesamten Walze inklusive des Walzenmantels zu dämpfen. Aufgrund dieser Maßnahme kann die Einrichtung zur Schwingungsdämpfung konstruktiv besonders einfach gehalten werden, wodurch sich die Betriebssicherheit der erfindungsgemäßen Walze erhöht. Da vielfach der Träger undrehbar in einem die Walze aufnehmenden Maschinengestell gelagert ist, können in diesem Falle bei der erfindungsgemäßen Walze während des Betriebes keine Unwuchten aufgrund der Einrichtung zur Schwingungsdämpfung auftreten.

Bei einer ersten, besonders bevorzugten Ausführungsform, die besonders kostengünstig herstellbar ist, umfasst die Einrichtung zur Schwingungsdämpfung einen passiven Schwingungsdämpfer. Bei diesem passiven Schwingungsdämpfer erfolgt die Schwingungsdämpfung dadurch, dass aufgrund von durch die Schwingung in dem Schwingungsdämpfer erzeugte Reibung Dämpfungskräfte erzeugt werden, und somit die Dämpfung dadurch erfolgt, dass zumindest ein Teil der Schwingungsenergie in Wärme oder eine andere Energie umgesetzt wird.

Bei einer konstruktiven Variante umfasst der passive Schwingungsdämpfer eine Tilgeranordnung, die mindestens einen passiven, eine bewegliche Masse aufweisenden Schwingungstilger beinhaltet, dessen Funktionsprinzip beispielsweise aus der DE 102 48 519 B4 bekannt ist.

Bei einer weiteren bevorzugten Ausführungsform umfasst die Einrichtung zur Schwingungsdämpfung einen viscoelastisch wirkenden Schwingungsdämpfer. Unter einem viscoelastischem Schwingungsdämpfer sind solche Dämpfer zu verstehen, bei welchen aufgrund der Schwingung eine Bewegung eines viscoelastischen Mediums hervorgerufen wird, beispielsweise in Form einer Strömung eines viscoelastischen Mediums durch eine Drosselstelle.

Ganz besonders bevorzugt ist eine Ausgestaltung einer erfindungsgemäßen, einen viscoelastisch wirkenden Schwingungsdämpfer umfassenden Walze, bei welcher der viscoelastisch wirkende Schwingungsdämpfer mindestens ein in einer Aussparung in dem Träger angeordnetes, viscoelastisches Dämpfungselement umfasst. Beispielsweise können über die Länge des Trägers verteilt mehrere Aussparungen vorgesehen sein, welche Dämpfungselemente nach der Art von hydraulischen Stoßdämpfern derart eingesetzt sind, dass die Dämpfungselemente beim Auftreten einer Schwingung des Trägers betätigt werden. Anstatt der passiven Dämpfungsdampfer können in der mindestens einen Aussparung auch aktive Schwingungsdämpfer vorgesehen sein.

Bei einer weiteren bevorzugten Ausführungsform der erfindungsgemäßen Walze ist in dem Träger mindestens eine Längsbohrung eingearbeitet, in welcher ein Dämpfungselement untergebracht ist.

Dieses Dämpfungselement kann beispielsweise ein Granulat umfassen. Versuche haben gezeigt, dass als Granulat beispielsweise handelsüblicher Bausand Verwendung finden kann. Eine derartige Ausführungsform zeichnet sich somit durch eine besonders kostengünstige Herstellbarkeit aus.

Darüber hinaus kann die Einrichtung zur Schwingungsdämpfung anstatt des passiven Schwingungsdämpfers auch einen aktiven Schwingungsdämpfer umfassen, welcher ausschließlich an den Träger angekoppelt ist. Besonders bevorzugt ist es dann, wenn ein Schwingungssensor zur Ermittlung von Signalen zur Ansteuerung des aktiven Schwingungsdämpfers vorgesehen ist, der in dem von dem Walzenmantel umschlossenen Raum angeordnet ist. Dieser Schwingungssensor erfasst dann die Schwingungen des Trägers und erzeugt aufgrund dieser gegebenenfalls unter Zwischenschaltung von einer elektronischen Datenverarbeitungseinrichtung und der Zuordnung der erfassten Schwingungen zu während des Betriebs erfassten Drehwinkelstellungen des Walzenmantels Signale, mit welchen der aktive Schwingungsdämpfer derart angesteuert wird, dass er eine vor Schwingungsamplitude phasenversetzte Kraft auf den Träger ausübt.

Eine besonders hohe Empfindlichkeit des Schwingungssensors und somit eine besonders effektive Ansteuerung des aktiven Schwingungsdämpfers wird erzielt, wenn sowohl der Schwingungssensor, als auch der aktive Schwingungsdämpfer in der Nähe der größten Schwingungsamplitude des Trägers angeordnet sind. Bei einer besonders bevorzugten Ausführungsform befinden sich somit sowohl der Schwingungssensor, als auch der Schwingungsdämpfer in dem von dem Walzenmantel umschlossenen Raum.

Die Erfindung verkörpert sich auch in einem Verfahren zur Dämpfung von Schwingungen einer Walze mit einem den Arbeitsumfang der Walze bildenden Walzenmantel und mit einem einen Ringraum zum Walzenmantel belassenden, den Walzenmantel in Längsrichtung durchsetzenden Träger, bei welchem die Schwingung der Walze entgegenwirkende Kräfte in dem vom Walzenmantel umschlossenen Raum ausschließlich in den Träger eingeleitet werden.

Bei einer ersten Variante des erfindungsgemäßen Verfahrens können die Kräfte mittels eines passiven Schwingungsdämpfers erzeugt werden. Es ist jedoch ebenfalls möglich, die Kräfte mittels eines aktiven Schwingungsdämpfers zu erzeugen.

Der aktive Schwingungsdämpfer wird dann vorzugsweise mit Signalen beaufschlagt, die mittels eines ausschließlich an dem Träger angekoppelten Schwingungssensors erzeugt werden.

Die Erfindung soll nun anhand der beigefügten rein schematischen Zeichnungen, die Ausführungsbeispiele der Erfindung zeigen, auf die sie jedoch nicht beschränkt ist, weiter erläutert werden. Es zeigen:
- Fig. 1: einen Längsschnitt durch ein erstes Ausführungsbeispiel einer erfindungsgemäßen Walze;
- Fig. 2: einen Längsschnitt durch ein zweites Ausführungsbeispiel einer erfindungsgemäßen Walze;
- Fig. 3: eine technische Variante einer mit passiven Schwingungsdämpfern ausgerüsteten, stempelgestützten Walze in einem Querschnitt sowie
- Fig. 4 und 5: weitere technische Varianten von mit passiven Schwingungsdämpfern ausgerüsteten, stempelgestützten Walzen in Fig. 3 entsprechenden Ansichten.

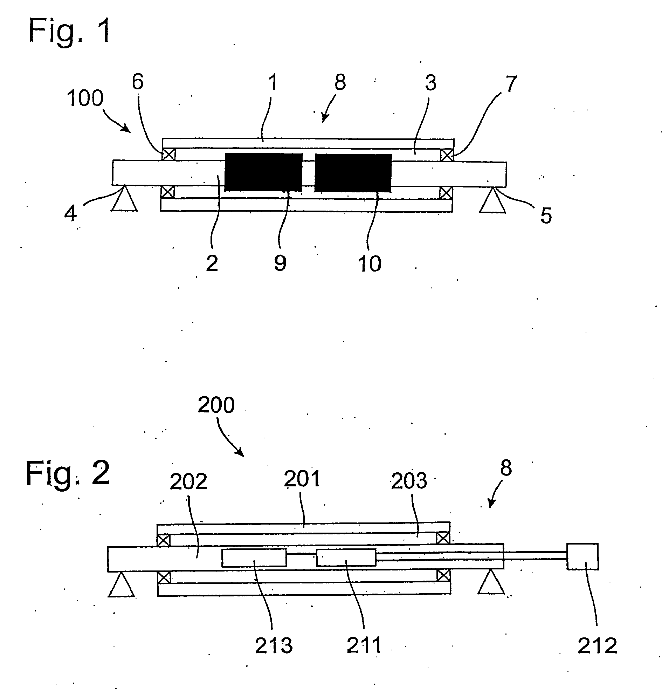

Die in Fig. 1 mit 100 bezeichnete erste Ausführungsform einer erfindungsgemäßen Walze umfasst einen Walzenmantel 1, welcher einen Raum R umschließt, der zentral von einem Träger 2 durchsetzt ist. Zwischen dem Außenumfang des Trägers 2 und dem Innenumfang des Walzenmantels 1 ist ein Ringraum 3 gebildet.

Der Träger 2 ist an den Stellen 4, 5 in einem in der Zeichnung nicht dargestellten Maschinengestell drehfest gelagert. Der Walzenmantel 1 stützt sich über Drehlager 6, 7 auf dem Träger 2 ab. In dem Ringraum 3 können in der Zeichnung nicht dargestellte hydraulische Stützelemente, Druckkammern oder ähnliche Mittel vorgesehen sein, die den Walzenmantel unterstützen.

Zur Dämpfung von Schwingungen, die während des Betriebs der Walze auftreten können, ist in Längsrichtung des Trägers 2 gesehen in dessen Mittenbereich, d.h. dort, wo das Auftreten von Schwingungen maximaler Amplitude zu erwarten ist, eine Einrichtung 8 zur Schwingungsdämpfung vorgesehen. Sie umfasst zwei passive Schwingungsdämpfer 9, 10, die den Träger über einen Teil seiner Länge mantelartig umgeben. Sie bestehen aus einem dämpfenden Material, beispielsweise einem solchen mit viscoelastischen Eigenschaften.

Bei einem weiteren, in Fig. 2 dargestellten Ausführungsbeispiel einer erfindungsgemäßen Walze 200, die einen Walzenmantel 201 umfasst, der wiederum über Drehlager unter Belassung eines Ringraumes 203 auf einem Träger 202 rotierbar gelagert ist, ist in Längsrichtung gesehen im Bereich der Mitte des Trägers 202, d.h. dort, wo die Schwingungen mit der größten Amplitude zu erwarten sind, ein Schwingungssensor 211 vorgesehen. Dieser Schwingungssensor erzeugt elektrische Signale, die von der Frequenz, der Richtung und der Amplitude der Schwingung des Trägers 202 abhängen. Diese Signale werden einer elektrischen Datenverarbeitungseinrichtung 212 zugeleitet und in dieser derart umgeformt und aufbereitet, dass sie als Ausgangssignale zur Ansteuerung eines Aktuators 213 geeignet sind. Mittels dieses Aktuators wird eine zu der von dem Schwingungssensor 211 aufgenommenen Schwingung phasenverschobene Schwingung in den Träger 202 zwischen den Lagerstellen des Trägers 202 in letzteren eingeleitet.

Sowohl der Schwingungssensor 211, als auch der Aktuator 213 befinden sich innerhalb des von der Walze umschlossenen Raumes R.

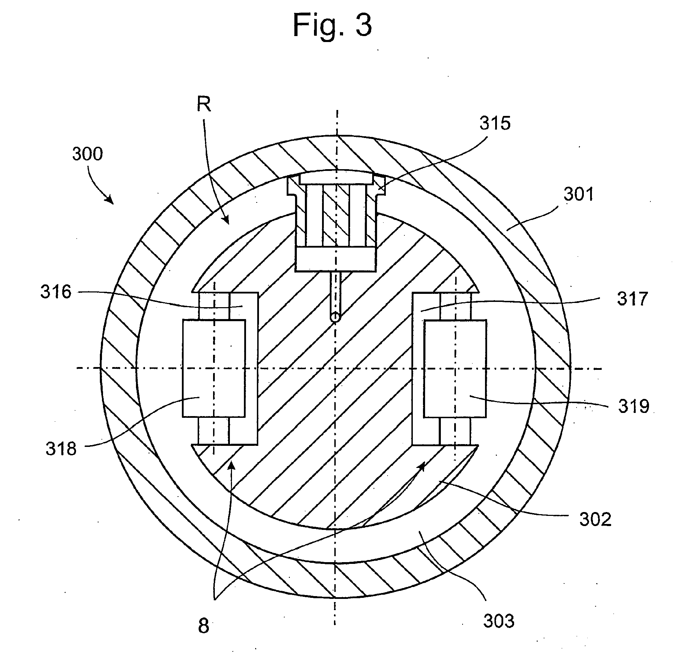

Das weitere in Fig. 3 dargestellte Ausführungsbeispiel einer Walze 300 zeigt - schematisch - eine stempelgestützte Walze, bei welcher sich deren Walzenmantel 301 über eine Reihe von in Längsrichtung der Walze nebeneinander angeordneter hydraulischer Stützelemente 315 an dem Träger 302 abstützt. Der Träger 302 umfasst einander gegenüberliegende, zur Seite weisende Aussparungen 316, 317, in welchen passive, viscoelastisch wirkende Dämpfungselemente 318, 319 vorgesehen sind. Die Dämpfungselemente 318, 319 sind so an den Träger 302 angekoppelt, dass sie insbesondere in derselben Richtung wirken wie die Stützelemente 315, d.h. in derjenigen Richtung, in welcher der Walzmantel 301 üblicherweise gegen ein Gegenwerkzeug, beispielsweise eine rotierende Gegenwalze, wirkt, da Schwingungen in dieser Richtung die größten negativen Auswirkungen auf das mit der Walze erzielte Arbeitsergebnis haben. Die Dämpfungselemente können auch als aktive Dämpfungselemente ausgebildet sein und Aktuatoren, deren Wirkprinzip demjenigen des Aktuators 213 entspricht, umfassen.

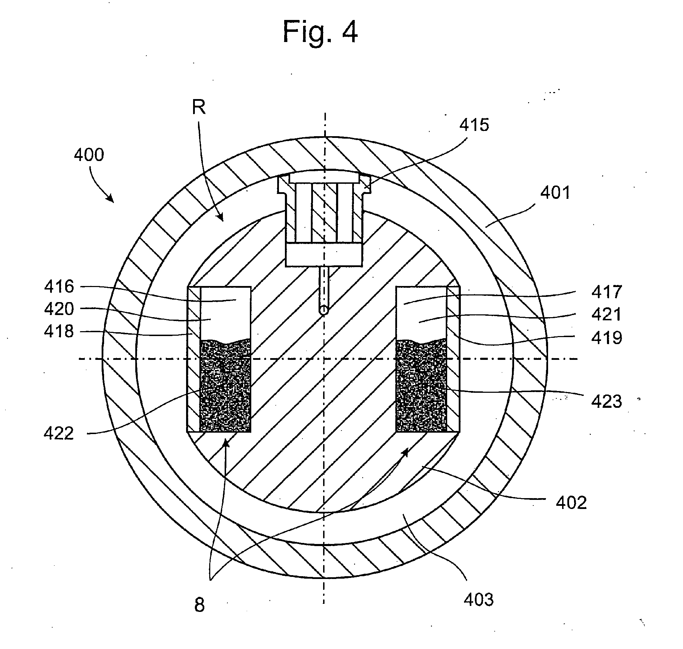

Das in Fig. 4 dargestellte, weitere Ausführungsbeispiel einer Walze 400 mit einer passiven Einrichtung 8 zur Schwingungsdämpfung umfasst wiederum einen Walzenmantel 401, der über eine Reihe von in Längsrichtung der Walze nebeneinander angeordneter hydraulischer Stützelemente 415 an dem Träger 402 abgestützt ist.

Der Träger 402 umfasst ebenfalls einander gegenüberliegende, zur Seite weisende Aussparungen 416, 417, die über radial nach außen hin dicht wirkende Wandungen 418, 419 verschlossen sind, so dass sich in Längsrichtung des Trägers 402 erstreckende Kanäle 420, 421 ausgebildet sind. Die Kanäle können auch durch in den Träger 402 eingearbeitete Längsbohrungen ausgebildet werden.

Beide Kanäle 420, 421 sind teilweise mit Bausand 422, 423 gefüllt.

Im Falle von Schwingungen des Trägers 402 während des Betriebs der Walze 400 werden die Sandkörner relativ zueinander verlagert. Die hierdurch entstehende Reibung führt zur Dämpfung der Schwingung.

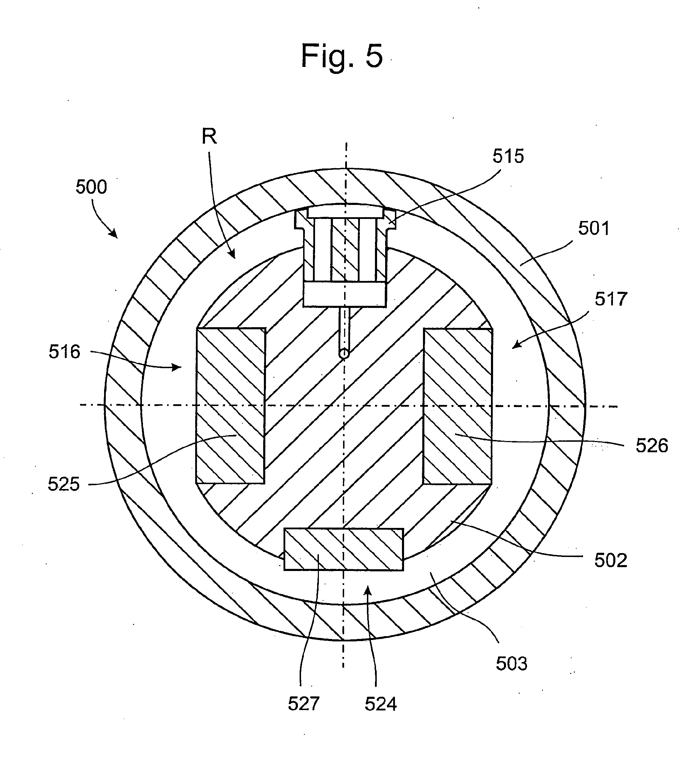

Bei der in Fig. 5 dargestellten Ausführungsform umfasst die Walze 500 wiederum einen Walzenmantel 501, der sich über eine Reihe von in Längsrichtung der Walze nebeneinander angeordneter hydraulischer Stützelemente 515 an dem Träger 502 abstützt. Wiederum sind in dem Träger 502 Aussparungen 516, 517, die einander seitlich gegenüberliegen, sowie eine Aussparung 524, die der Reihe von Stützelementen 515 gegenüberliegend angeordnet ist, eingearbeitet. In diese Aussparungen sind Elemente 525, 526, 527 aus einem festen Material eingepasst und befestigt. Diese Elemente sind so gewählt, dass sie ein anderes Eigenschwingungsverhalten, insbesondere eine andere Eigenschwingungsfrequenz aufweisen, als der Träger 502 und so die Schwingung des letzteren dämpfen.

### Bezugszeichenliste:

- 100: Walze
- 1: Walzenmantel
- 2: Träger
- 3: Ringraum
- 4: Stelle
- 5: Stelle
- 6: Drehlager
- 7: Drehlager
- 8: Einrichtung
- 9: Schwingungsdämpfer
- 10: Schwingungsdämpfer
- 200: Walze
- 201: Walzenmantel
- 202: Träger
- 203: Ringraum
- 211: Sensor
- 212: Datenverarbeitungseinrichtung
- 213: Aktuator
- 300: Walze
- 301: Walzenmantel
- 302: Träger
- 303: Ringraum
- 316: Aussparung
- 317: Aussparung
- 318: Dämpfungselement
- 319: Dämpfungselement
- 400: Walze
- 401: Walzenmantel
- 402: Träger
- 403: Ringraum
- 415: Stützelemente
- 416: Aussparung
- 417: Aussparung

- 418: Wandung
- 419: Wandung
- 420: Kanal
- 421: Kanal
- 422: Bausand
- 423: Bausand
- 500: Walze
- 501: Walzenmantel
- 502: Träger
- 503: Ringraum
- 515: Stützelemente
- 516: Aussparung
- 517: Aussparung
- 524: Aussparung
- 525: Element
- 526: Element
- 527: Element

- R: Raum

## Patentansprüche

1. Walze (100, 200, 300, 400, 500) mit einem den Arbeitsumfang der Walze (100, 200, 300, 400, 500) bildenden und einen Raum (R) umschließenden Walzenmantel (1, 201, 301, 401, 501), mit einem einen Ringraum (203, 303, 403, 503) zum Walzenmantel (1, 201, 301, 401, 501) belassenen den Walzenmantel in Längsrichtung durchsetzenden Träger (2, 202, 302, 402, 502) und mit einer Einrichtung zur Schwingungsdämpfung (8)
**dadurch gekennzeichnet,**
**dass** die Einrichtung zur Schwingungsdämpfung (8) in dem Raum (R) angeordnet und ausschließlich an dem Träger (2, 202, 302, 402, 502) angekoppelt ist.

2. Walze nach Anspruch 1,
**dadurch gekennzeichnet,**
**dass** die Einrichtung zur Schwingungsdämpfung (8) einen passiven Schwingungsdämpfer (9, 10) umfasst.

3. Walze nach Anspruch 2,
**dadurch gekennzeichnet,**
**dass** der passive Schwingungsdämpfer (10) eine Tilgeranordnung mit mindestens einem passiven, eine bewegliche Masse aufweisenden Schwingungstilger umfasst.

4. Walze nach Anspruch 2 oder 3,
**dadurch gekennzeichnet,**
**dass** die Einrichtung zur Schwingungsdämpfung (8) einen viscoelastisch wirkenden Schwingungsdämpfer (9, 10) umfasst.

5. Walze nach Anspruch 4,
**dadurch gekennzeichnet,**
**dass** der viskoelastisch wirkende Schwingungsdämpfer mindestens ein in einer Aussparung (316, 317) in dem Träger (302) angeordnetes viscoelastisches Dämpfungselement (318, 319) umfasst.

6. Walze nach Anspruch 2 oder 3,
**dadurch gekennzeichnet,**
**dass** die Einrichtung zur Schwingungsdämpfung in mindestens einer Längsbohrung des Trägers angeordnetes Dämpfungselement umfasst.

7. Walze nach Anspruch 6,
**dadurch gekennzeichnet,**
**dass** das Dämpfungselement ein Granulat umfasst.

8. Walze nach Anspruch 7,
**dadurch gekennzeichnet,**
**dass** das Granulat Sand ist.

9. Walze nach Anspruch 1,
**dadurch gekennzeichnet,**
**dass** das die Einrichtung zur Schwingungsdämpfung einen aktiven Schwingungsdämpfer (213) umfasst.

10. Walze nach Anspruch 9,
**dadurch gekennzeichnet,**
**dass** der aktive Schwingungsdämpfer (213) mit einem Schwingungssensor (211) verbunden ist, welcher ausschließlich an dem Träger (202) angekoppelt ist.

11. Walze nach Anspruch 10,
**dadurch gekennzeichnet,**
**dass** der Schwingungssensor (211) in dem von dem Walzenmantel (201) umschlossenen Raum (R) angeordnet ist.

12. Walze nach einem der Ansprüche 9 bis 11,
**dadurch gekennzeichnet,**
**dass** das der aktive Schwingungsdämpfer (213) in dem von dem Walzenmantel (201) umschlossenen Raum (R) angeordnet ist.

13. Verfahren zur Dämpfung von Schwingungen einer Walze mit einem den Arbeitsumfang der Walze bildenden und einen Raum (R) umschließenden Walzenmantel und mit einem einen Ringraum zum Walzenmantel belassenden, den Walzenmantel in Längsrichtung durchsetzenden Träger,
**dadurch gekennzeichnet,**
**dass** der Schwingung der Walze entgegenwirkenden Kräfte innerhalb des von dem Walzenmantel umschlossenen Raumes (R) ausschließlich in den Träger eingeleitet werden.

14. Verfahren nach Anspruch 13,
**dadurch gekennzeichnet,**
**dass** die Kräfte mittels eines passiven Schwingungsdämpfers erzeugt werden.

15. Verfahren nach Anspruch 13,
**dadurch gekennzeichnet,**
**dass** die Kräfte mittels eines aktiven Schwingungsdämpfers erzeugt werden.

16. Verfahren nach Anspruch 15,
**dadurch gekennzeichnet,**
**dass** der aktive Schwingungsdämpfer mit Signalen beaufschlagt wird, die mittels eines ausschließlich an den Träger angekoppelten Schwingungssensors erzeugt werden.
